(19) 〔Europäisches Patentamt / European Patent Office / Office européen des brevets〕

(11) **EP 2 543 167 B1**

(12) **EUROPEAN PATENT SPECIFICATION**

(45) Date of publication and mention
of the grant of the patent:
**16.09.2015 Bulletin 2015/38**

(51) Int Cl.:
***H04L 27/00*** *(2006.01)*     ***H04L 27/38*** *(2006.01)*

(21) Application number: **11842454.8**

(86) International application number:
**PCT/CN2011/073109**

(22) Date of filing: **21.04.2011**

(87) International publication number:
**WO 2012/142760 (26.10.2012 Gazette 2012/43)**

(54) **PHASE ERROR COMPENSATION ARRANGEMENT AND PHASE ERROR COMPENSATION METHOD**

PHASENFEHLERKOMPENSATIONSANORDNUNG UND
PHASENFEHLERKOMPENSATIONSVERFAHREN

AGENCEMENT DE COMPENSATION D'ERREUR DE PHASE ET PROCÉDÉ DE COMPENSATION
D'ERREUR DE PHASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.01.2013 Bulletin 2013/02**

(73) Proprietor: **Huawei Technologies Co., Ltd.
Longgang District
Shenzhen, Guangdong 518129 (CN)**

(72) Inventors:
• **MAZZUCCO, Christian
80992 Munich (DE)**

• **BIANCHI, Sergio
80992 Munich (DE)**

(74) Representative: **Kreuz, Georg Maria
Huawei Technologies Duesseldorf GmbH
Riesstrasse 8
80992 München (DE)**

(56) References cited:
**WO-A1-2006/019371     CN-A- 1 541 473
CN-A- 101 057 470     US-A1- 2002 126 748
US-A1- 2008 292 029**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The invention relates to the field of data communication and in particular to phase error compensation of a receive signal.

### BACKGROUND OF THE INVENTION

In data communication systems, signals transmitted from a transmitter to a receiver are often modulated according to one of various modulation schemes. If a demodulator in the receiver needs to recover a carrier of the receive signal, then frequency impairments between a local oscillator of the transmitter and a local oscillator of the receiver may be taken into account. For example, the impairments of frequency and phase noise of the oscillators may be estimated and mitigated by the receiver in order to improve the efficiency of reconstruction of the receive signal.

To estimate and mitigate the impairments and noise, various digital techniques may be deployed. For example, it is possible to insert known symbols among data symbols in the transmission, which are used at the receiver side to estimate phase and frequency errors. For example, such known symbols are called pilot symbols. However, if for example the oscillator is affected with increased phase noise, the performance of such technique is reduced. Furthermore, if a higher order modulation format is used, the performance of such technique may be insufficient. In order to improve the performance of the described technique, the number of pilot symbols may be increased. However, this can reduce the spectrum efficiency.

Another possible technique employs a closed loop circuit, which may include a phase-locked loop in order to refine the estimation of data symbols. However, such closed loop circuits may show a degraded performance for increasing phase noise.

Document US 2002/126748A1 (RAFIE MANOUCHEHRS [US] ET AL) discloses a method for a carrier phase recovery apparatus in a multiple-link hopping radio system including hopping among a plurality of radio links to receive bursts of radio signals on the plurality of radio links and determining channel information for each radio link from a received burst on the radio link. Further, the disclosed method includes storing the determined channel information and using the determined channel information for the radio link to reliably recover the carrier phase of a next received burst on the radio link.

### SUMMARY OF THE INVENTION

It is the object of the present invention to provide an efficient concept for compensating a phase error of a receive signal.

This object is achieved by the features of the independent claims. Further embodiments are apparent from the dependent claims.

The present invention is based on the finding that a decision-directed feed-forward structure can be used to efficiently determine a phase error of a receive signal. For example, a value, in particular a complex value of the receive signal, can be mapped onto a mapped value, for example a complex constellation point of a modulation scheme like a quadrature amplitude modulation, QAM, or the like. If there is a phase error in the receive signal, then the value of the receive signal and the mapped value differ and, together, carry an information about the phase error. By combining the value and the mapped value, for example by a complex multiplication, the phase error can be estimated or extracted from the combination result. The estimated phase error may be used to correct or compensate the receive signal.

According to a first aspect, the invention relates to a phase error compensation arrangement for compensating a phase error of a receive signal. The phase error compensation arrangement comprises a first phase error compensator and a second phase error compensator arranged downstream of the first phase error compensator. The first phase error compensator is configured to obtain a first estimated phase error of the receive signal based on a value of the receive signal and a predefined pilot value, to shift a phase of the receive signal by the first estimated phase error, and to provide the phase shifted receive signal to the second phase error compensator. The first phase error compensator includes an interpolator configured to provide a time-varying estimation of the first estimated phase error ($\varphi_{PS}$) of the receive signal for the times at which no pilot value is present in the receive signal. The second phase error compensator comprises a delay element for delaying the phase shifted receive signal, a phase error estimator for providing a second estimated phase error of the phase shifted receive signal, and a phase shifter for shifting a phase of the delayed phase shifted receive signal by the second estimated phase error. The phase error estimator comprises a slicer for mapping a value of the phase shifted receive signal onto a mapped value, a conjugator for conjugating one of the mapped value and the value of the phase shifted receive signal to obtain a conjugated output and an unprocessed output, a multiplier for multiplying the conjugated output and the unprocessed output of the conjugator to obtain a distinction value, and a phase determiner for determining a phase of the distinction value to obtain the second estimated phase error. Moreover, the phase error compensation arrangement includes a further slicer arranged downstream the second phase error compensator for a mapping a value of a signal at an input of the further slicer onto a mapped value at an output of the further slicer, and a feedback phase error compensator. The feedback phase error compensator is configured to obtain a feedback phase error upon the basis of a difference value between the value at the input of the further slicer and a mapped value at the output of the further slicer, and to shift a phase of the receive signal by the feedback phase error to obtain the signal at the input of the further slicer. Accordingly, a mapping error at the further slicer is evaluated in a feedback path to determine a phase error, namely the feedback phase error which is used to rotate the receive signal before providing it to the further slicer.

Accordingly, in the phase error compensation arrangement according to the first aspect of the invention, the second phase error compensator is, for example, connected in series to the first phase error compensator. For example, a phase error of the receive signal is first compensated by rotating the receive signal, in particular a value of the receive signal by the first estimated phase error, and afterwards rotated by the second estimated phase error of the phase error estimator. In particular, the phase error estimation of the second phase error compensator is performed on the phase-shifted output signal of the first phase error compensator.

In the conjugator, a complex conjugation of one of the values is performed while the remaining value is unchanged. If the phase of the value of the receive signal and the phase of the mapped value are equal, the result of the multiplication, namely the distinction value, is a real number without an imaginary part. Hence, a zero phase error can be determined by the phase determiner. However, if the value of the receive signal and the mapped value differ in their phases, the distinction value as the result of the multiplication will have an imaginary part. The phase error of the receive signal, in particular a momentary phase error, may be determined by calculating the phase of the distinction value. Accordingly, the second phase error can be determined with little effort.

Such a phase error compensation arrangement makes it possible to correct or at least partially correct a phase error of a receive signal in order to allow, for example, a better determination of data symbols included in the receive signal. By the use of the phase error estimator included in the first aspect of the invention, the second phase error can be estimated efficiently. With the phase shifter, a rotation of the receive signal, in particular in the complex plane, is accomplished to compensate for the phase error. The second phase error compensator may also be called a feed forward phase error compensator.

According to a first implementation form of the first aspect, the invention relates to a phase error compensation arrangement, wherein the phase error estimator further includes a filter for filtering an output value of the phase determiner to obtain the estimated phase error. Hence, past output values of the phase determiner can be weighted to obtain the estimated phase error.

The filter may for example include a low-pass filter. Hence, punctual deviation of the output value can be averaged out in the estimated phase error. The filter may for example include a moving average filter. With a moving average filter, an average over a distinct number of past output values can be calculated to obtain the estimated phase error, wherein the past output values may be weighted differently. According to some implementation forms, the filter may include equal weights for the output values of the phase determiner. In these cases, the estimated phase error corresponds to a mean value of the past output values. The filter may be implemented as a finite impulse response, FIR, filter.

According to a second implementation form of the first aspect, the invention relates to a phase error compensation arrangement, wherein the phase shifter includes a complex multiplier for multiplying a value of the phase shifted delayed receive signal with an error value, the error value being determined by a complex exponential function of the second estimated phase error. The error value may for example be determined according to the formula $\exp(j \cdot \varphi_{FF}(t))$, wherein $\varphi_{FF}(t)$ is a momentary value of the second estimated phase error at the time t.

According to a third implementation form of the first aspect, the invention relates to a phase error compensation arrangement, which is further configured to adapt a delay time of the delay element to a processing time of the phase error estimator. The delay time of the delay element may for example be chosen such that the receive signal is delayed until the second phase error is estimated for the momentary value of the receive signal.

According to a fourth implementation form of the first aspect, the invention relates to a phase error compensation arrangement, wherein the first phase error compensator is configured to determine phase error values upon the basis of the value of the receive signal and the predefined pilot value at given times, and to obtain the first estimated phase error by interpolating between the phase error values. The receive signal may for example include one or more pilot symbols, which are predefined, and a number of payload data symbols. The estimated phase error of the first phase error compensator may then be interpolated at the times at which payload symbols are transmitted in the receive signal by interpolating between the phase error values determined for the times at which pilot symbols are transmitted in the receive signal. The interpolation may for example be a linear interpolation or a higher order interpolation.

A feedback part of the feedback phase error compensator may for example be based on a phase-locked loop, PLL, scheme, wherein the phase information of the PLL is used for compensating the receive signal. The feedback phase error compensator may for example include a phase detector and a loop filter being provided with a difference value to obtain the feedback phase error. An output of the loop filter may be provided to a voltage-controlled oscillator VCO that may act as an integrator or, for a digital circuit, as an accumulator. An output of the VCO may be a phase value that is used as the feedback phase error.

According to a sixth implementation form of the first aspect, the invention relates to a phase error compensation arrangement comprising another phase error compensator being arranged in cascade with the second phase error compensator. The another phase error compensator includes another phase error estimator as described before for the phase error estimator of the second phase error compensator. Accordingly, a phase error of the receive signal can be reduced in several stages, namely the first phase error compensator, the second phase error compensator and another phase error compensator.

The another phase error compensator may for example include a delay element for delaying an input signal of the another phase error compensator, the another phase error estimator for providing another estimated phase of said input signal, and a phase shifter for shifting a phase of the delayed input signal by the another estimated phase error.

Accordingly, the another phase error estimator may comprise another slicer for mapping a value of said input signal onto a mapped value another conjugator for conjugating one of the mapped value and the value of said input signal to obtain another conjugated output and another unprocessed output, another multiplier for multiplying the another conjugated output and the another unprocessed output of the another conjugator to obtain another distinction value, and another phase determiner for determining a phase of the another distinction value to obtain the another estimated phase error.

According to a second aspect, the invention relates to a phase error compensation method for compensating a phase error of a receive signal according to appended claim 12.

According to some implementation forms of the second aspect, obtaining the estimated phase error includes the filtering of the distinction value. Further, implementation forms of the second aspect arise from the various implementation forms of the first aspect of the invention.

BRIEF DESCRIPTION OF THE DRAWINGS

Further embodiments of the invention will be described with reference to the following figures, in which:

Fig. 1    shows a phase error estimator according to an implementation form;

Fig. 2    shows a phase error compensator according to an implementation form;

Fig. 3    shows a phase error compensation arrangement according to an implementation form;

Fig. 4    shows a phase error compensation arrangement according to an implementation form;

Fig. 5    shows a detail feedback phase error compensator according to an implementation form; and

Fig. 6    shows a phase error compensation arrangement according to an implementation form.

DESCRIPTION OF THE DRAWINGS

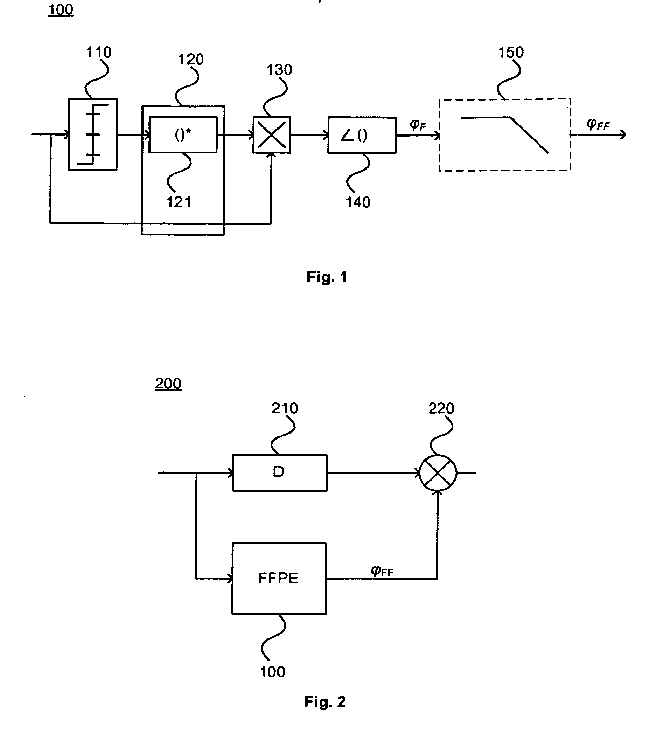

Fig. 1 shows an implementation form of a phase error estimator 100. The phase error estimator 100 comprises a slicer 110 connected to an input of the phase error estimator and a conjugator 120, which on its input side is connected to an output of the slicer 110 and to the input of the phase error estimator. The conjugator 120 includes a conjugation block 121 for performing a complex conjugation of its input signal. Outputs of the conjugator 120 are connected to a complex multiplier 130. An output of the multiplier 130 is coupled to a phase determiner 140 which has a filter 150 arranged downstream.

The slicer 110 is configured to map a value of a receive signal at its input onto a mapped value at its output. The receive signal may be a digitally sampled and downconverted radio frequency signal which can be composed of modulated symbols, for example quadrature amplitude-modulated, QAM, symbols.

For example, the slicer 110 compares the receive signal with a number of thresholds and performs a mapping onto the mapped value based on the comparison results. For example, the slicer 110 performs a two-dimensional operation in the complex plane to map a value of the receive signal to one of a predefined number of constellation points of a modulation scheme.

The output signal of the slicer 110 with the mapped value and the unprocessed receive signal with an unprocessed value are provided to the conjugator 120 which performs a complex conjugation of one of its two input signals. In the implementation form of Fig. 1, the mapped value is conjugated by the conjugation element 121, while the receive signal remains unprocessed. However, according to other implementation forms, it is also possible to perform a conjugation of the receive signal and leave the output signal of the slicer 110 unprocessed.

The outputs of the conjugator 120, namely the conjugated output and the unprocessed output, are provided to the multiplier 130 to perform a complex multiplication, which results in a distinction value being provided to the phase determiner 140. The phase determiner 140 determines the complex phase $\varphi_F$ of the distinction value, for example according to

$$\varphi_F = \tan^{-1}\left(\mathrm{Im}[H]\big/\mathrm{Re}[H]\right),$$

wherein H is he complex distinction value provided by the multiplier 130.

The phase value $\varphi_F$ is provided to the filter 150 to obtain an estimated phase error $\varphi_{FF}$ of the receive signal. The filter 150 may be a moving average filter, for example an FIR filter having a low-pass transfer function. A filter length of the filter 150 may be in the order of ten filter taps. The coefficients of such an FIR filter may all be equal to achieve a standard mean value of the phase

value $\varphi_F$, or the FIR filter may have coefficients adapted to a desired filter transfer function. An equal weighted filter may be implemented with less effort. For example, the last N phase values $\varphi_F$ can be summed up and divided by N to obtain the estimated phase error $\varphi_{FF}$.

According to some implementation forms, the filter 150 can be left out in the phase error estimator 100. Accordingly, the phase value $\varphi_F$ could be directly used as the estimated phase error $\varphi_{FF}$.

Fig. 2 shows an implementation of a phase error compensator 200, which comprises a delay element 210, a phase shifter 220 and a phase error estimator 100 according to an implementation form of Fig. 1. In the phase error compensator 200, the receive signal is provided to the delay element 210 for delaying the receive signal. The receive signal is further provided to the phase error estimator 100 which can also be called a feed-forward phase error estimator, FFPE, to obtain the estimated phase error $\varphi_{FF}$ of the receive signal. The phase shifter 220 is configured to shift the phase of the delayed receive signal, namely the output of the delay element 210, by the estimated phase error in order to compensate a phase error in the receive signal. For example, the phase shifter 220 includes a complex multiplier for multiplying a value of the delayed receive signal with an error value. The error value may be determined by a complex exponential function of the estimated phase error $\varphi_{FF}$, for example $\exp(j \cdot \varphi_{FF}(t))$, with $\varphi_{FF}(t)$ being a momentary value of the estimated phase error.

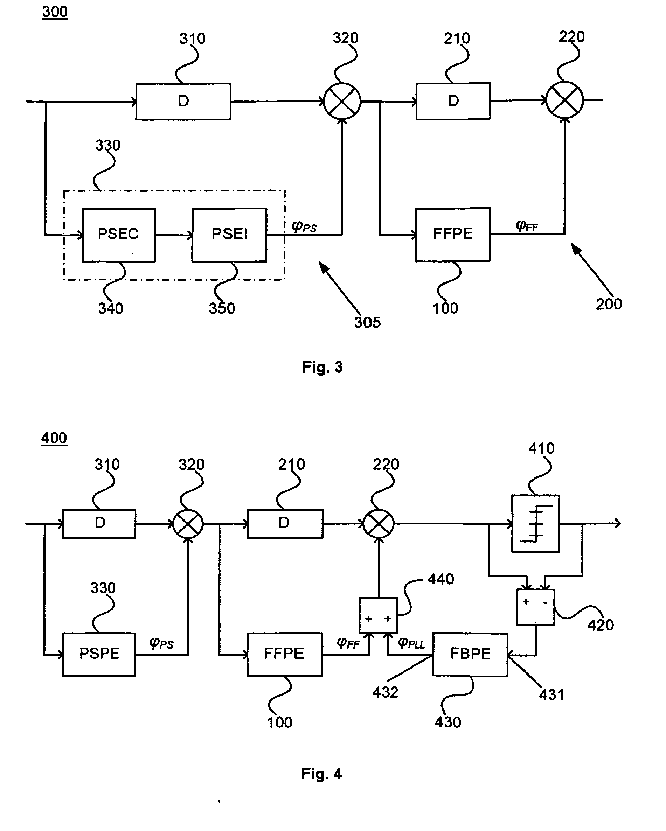

Fig. 3 shows an implementation form of a phase error compensation arrangement 300 which includes the phase error compensator 200 of Fig. 2 and a further phase error compensator 305 arranged upstream of the phase error compensator 200. The further phase error compensator 305 comprises a delay element 310, a phase shifter 320 and a pilot symbol-based phase error estimator 330. The pilot symbol-based phase error estimator, PSPE, 330 comprises a pilot symbol error calculation, PSEC, block 340 and a pilot symbol error interpolation, PSEI, block 350. The pilot symbol error calculation block 340 is able to detect predefined pilot symbols in the receive signal, which are inserted in the receive signal at given times between payload symbols, and to calculate a phase deviation between a value of the receive signal and a value of the predefined pilot symbol. For example, at given times, phase error values are determined which are provided to the pilot symbol-based phase error interpolator 350. The interpolator 350 performs an interpolation between the phase error values for the times at which no pilot symbol is present in the receive signal. Hence, a time-varying estimation of the phase error $\varphi_{PS}$ is calculated by the interpolator 350 and provided to the phase shifter 320 whose function is similar or identical to the function of the phase shifter 220. Accordingly, the receive signal delayed by the delay element 310 is phase-shifted or rotated by the estimated phase error $\varphi_{PS}$ and provided to the first phase error compensator 200.

Fig. 4 shows a further implementation form of a phase error compensation arrangement 400, which, for example, is based on the arrangement 300 of Fig. 3. The arrangement of Fig. 4 further comprises a further slicer 410 which is arranged downstream the phase shifter 220. An input of the further slicer 410 and an output of the further slicer 410 are provided to a difference block 420, which is coupled to a feedback phase error estimator, FBPE, 430. In particular, an output of the difference block 420 is coupled to an input 431 of the feedback phase error estimator 430. An output 432 of the feedback phase error estimator 430 is coupled to a summing block 440, whose output is coupled to the phase shifter 220.

A function of the further slicer 410 is similar to that of the slicer 110, namely mapping of a value at an input of the slicer 410 to a mapped value at an output of the slicer 410, which for example is performed based on a number of thresholds. The difference block 420 calculates the difference between the input value and the mapped value and provides it to the feedback phase error estimator 430, which for example is based on a PLL scheme. A feedback phase value $\varphi_{PLL}$ is provided to the summing block 440 together with the estimated phase error $\varphi_{FF}$ of the phase error estimator 100. The phase shifter 220 performs a rotation of the receive signal based on the sum of the two phase error values $\varphi_{FF}$ and $\varphi_{PLL}$. The blocks 420 and 430 are part of a feedback phase error compensator, which may further improve-performance of the phase error compensation described before.

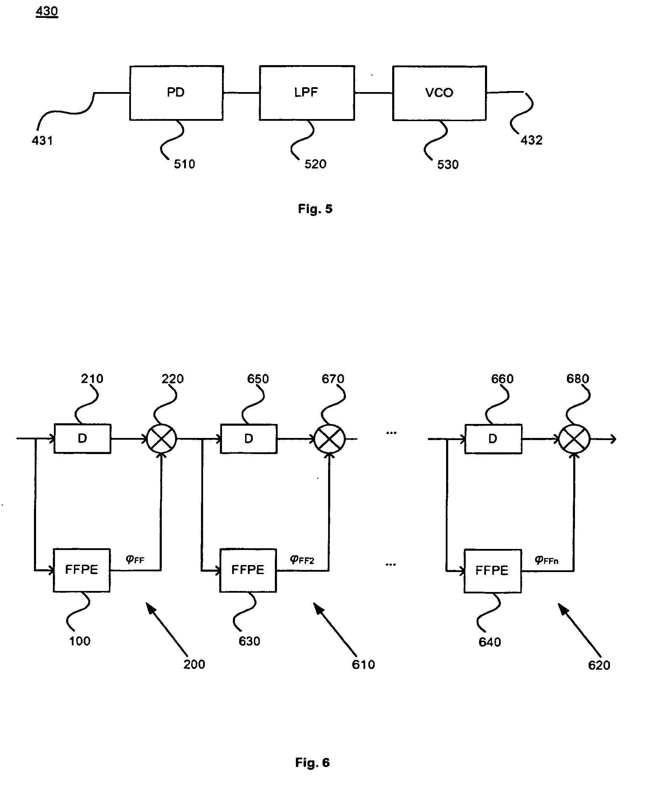

With reference to Fig. 5, the feedback phase error estimator 320 may comprise a phase detector 510, a loop filter 520 connected to an output of the phase detector 510 and a VCO 530 which is controlled by an output of the loop filter 520. In particular, a phase value of an output of the VCO 530 may be used as the feedback phase error $\varphi_{PLL}$ that serves as a basis for the phase-shifting in the phase shifter 220.

According to some implementation forms, the phase error compensator 200 of Figs. 2 or 3 can be replaced or extended by a cascade of two or more identical or similar compensator stages.

For example, Fig. 6 shows an implementation form of a phase error compensation arrangement in which the phase error compensator 200 is cascaded with a further phase error compensator 610 and possibly another phase error compensator 620. The phase error compensators 610, 620 may be embodied identical or similar to the phase error compensator 200. In particular, compensators 610, 620 may comprise phase error estimators 630, 640 which perform the same function as the phase error estimator 100. Accordingly, the phase error estimator 630 provides another estimated phase error $\varphi_{FF2}$ and the phase error estimator 640 provides still another phase error estimate $\varphi_{FFn}$. For the compensation of the phase errors, the compensators 610, 620 comprise delay elements 650, 660 and phase shifters 670, 680.

By cascading several similar phase error compensators, in particular with feed-forward phase error estimators, a remaining phase error of a receive signal can be reduced from compensator stage to compensator stage.

According to some implementation forms, the cascade of two or more phase error compensators according to the implementation form of the phase error compensator 200 can be combined with the pilot symbol-based phase error compensator of Fig. 3 connected upstream and a feedback phase error compensator of Fig. 4 connected downstream the cascade.

However, a combination of the pilot symbol-based phase error compensator in combination with a cascade of the decision-directed feed-forward phase error compensators may provide sufficient performance in various implementation forms.

The described arrangements may be used in various radio frequency receivers or in optical receivers.

**Claims**

1. Phase error compensation arrangement (300, 400) for compensating a phase error of a receive signal, the phase error compensation arrangement (300, 400) comprising a first phase error compensator (305) and a second phase error compensator (200) arranged downstream of the first phase error compensator (305), wherein the first phase error compensator (305) is configured to obtain a first estimated phase error ($\varphi_{PS}$) of the receive signal based on a value of the receive signal and a predefined pilot value, to shift a phase of the receive signal by the first estimated phase error ($\varphi_{PS}$), and to provide the phase shifted receive signal to the second phase error compensator (200), the first phase error compensator (305) including an interpolator (350) configured to provide a time-varying estimation of the first estimated phase error ($\varphi_{PS}$) of the receive signal for the times at which no pilot value is present in the receive signal, wherein the second phase error compensator (200) comprises:

   - a delay element (210) for delaying the phase shifted receive signal;
   - a phase error estimator (100) for providing a second estimated phase error ($\varphi_{FF}$) of the phase shifted receive signal;
   - a phase shifter (220) for shifting a phase of the delayed phase shifted receive signal by the second estimated phase error ($\varphi_{FF}$); and wherein the phase error estimator (100) comprises:
   - a slicer (110) for mapping a value of the phase shifted receive signal onto a mapped value;
   - a conjugator (120) for conjugating one of the mapped value and the value of the phase shifted receive signal to obtain a conjugated output and an unprocessed output;
   - a multiplier (130) for multiplying the conjugated output and the unprocessed output of the conjugator (120) to obtain a distinction value;
   - a phase determiner (140) for determining a phase of the distinction value to obtain the second estimated phase error ($\varphi_{FF}$); and wherein the phase error compensation arrangement (400) is **characterized by** further comprising:

      a further slicer (410) arranged downstream the second phase error compensator (200) for mapping a value of a signal at an input of the further slicer (410) onto a mapped value at an output of the further slicer (410), and
      a feedback phase error compensator (420, 430) being configured:

      - to obtain a feedback phase error ($\varphi_{PLL}$) upon the basis of a difference value between the value at the input of the further slicer (410) and the mapped value at the output of the further slicer (410); and
      - to shift a phase of the receive signal by the feedback phase error ($\varphi_{PLL}$) to obtain the signal at the input of the further slicer (410).

2. Phase error compensation arrangement (300, 400) of the preceding claim, wherein the phase error estimator (100) further includes a filter (150) for filtering an output value ($\varphi_F$) of the phase determiner (140) to obtain the second estimated phase error ($\varphi_{FF}$).

3. Phase error compensation arrangement (300, 400) of the preceding claim, wherein the filter (150) includes a low-pass filter, in particular a moving average filter.

4. Phase error compensation arrangement (300, 400) of one of claims 2 and 3, wherein the filter (150) includes equal weights for the output values of the phase determiner (140).

5. Phase error compensation arrangement (300, 400) of one of the preceding claims, wherein the phase shifter (220) includes a complex multiplier for multiplying a value of the phase shifted delayed receive signal with an error value, the error value being determined by a complex exponential function of the second estimated phase error ($\varphi_{FF}$).

6. Phase error compensation arrangement (300, 400) of one of the preceding claims, being further configured to adapt a delay time of the delay element (210) to a processing time of the phase error estimator (100).

7. Phase error compensation arrangement (300, 400) of one of the preceding claims,
wherein the first phase error compensator (305) is configured to determine phase error values upon the basis of the value of the receive signal and the predefined pilot value at given times and to obtain the first estimated phase error ($\varphi_{PS}$) by interpolating between the phase error values.

8. Phase error compensation arrangement (400) of the preceding claim,
wherein the feedback phase error compensator (420, 430) includes a phase detector (510) and a loop filter (520) being provided with the difference value to obtain the feedback phase error.

9. Phase error compensation arrangement (300, 400) of one of the preceding claims,
comprising another phase error compensator (610, 620) being arranged in cascade with the second phase error compensator (200), the another phase error compensator (610, 620) including another phase error estimator (630, 640) as defined in one of the preceding claims.

10. Phase error compensation arrangement (300, 400) of the preceding claim, wherein the another phase error compensator (610, 620) includes:

   - a delay element for delaying an input signal of the another phase error compensator (610, 620);
   - the another phase error estimator (630, 640) for providing another estimated phase error ($\varphi_{FF2}$, $\varphi_{FFn}$) of said input signal; and
   - a phase shifter (220) for shifting a phase of the delayed input signal by the another estimated phase error ($\varphi_{FF2}$, $\varphi_{FFn}$).

11. Phase error compensation arrangement (300, 400) of claim 10,
wherein the another phase error estimator (630, 640) comprises:

   - another slicer for mapping a value of said input signal onto a mapped value;
   - another conjugator for conjugating one of the mapped value and the value of said input signal to obtain another conjugated output and another unprocessed output;
   - another multiplier for multiplying the another conjugated output and the another unprocessed output of the another conjugator to obtain another distinction value; and
   - another phase determiner (140) for determining a phase of the another distinction value to obtain the another estimated phase error ($\varphi_{FF2}$, $\varphi_{FFn}$).

12. Phase error compensation method for compensating a phase error of a receive signal, the phase error compensation method comprising:

   - obtaining a first estimated phase error ($\varphi_{PS}$) of the receive signal based on a value of the receive signal and a predefined pilot value;
   - shifting a phase of the receive signal by the first estimated phase error ($\varphi_{PS}$), to obtain a first phase shifted receive signal;
   - mapping a value of the first phase shifted receive signal onto a first mapped value;
   - conjugating one of the first mapped value and the value of the first phase shifted receive signal to obtain a conjugated output value and an unprocessed output value;
   - multiplying the conjugated output value and the unprocessed output value to obtain a distinction value;
   - determining a phase of the distinction value to obtain a second estimated phase error ($\varphi_{FF}$);
   - delaying the first phase shifted receive signal;
   - shifting a phase of the delayed first phase shifted receive signal by the second estimated phase error ($\varphi_{FF}$), to obtain a second phase shifted receive signal;
   wherein obtaining a first estimated phase error ($\varphi_{PS}$) of the receive signal includes providing a time-varying estimation of the first estimated phase error ($\varphi_{PS}$) of the receive signal for the times at which no pilot value is present in the receive signal;
   **characterized in that** the phase error compensation method further comprises the steps:

   - mapping a value of the second phase shifted receive signal onto a second mapped value;
   - calculating a difference value between the second phase shifted receive signal by the second estimated phase error ($\varphi_{FF}$) and the mapped value of the second phase shifted receive signal; and

   obtaining a feedback phase error ($\varphi_{PLL}$) based on the obtained difference value;

   - shifting a phase of the receive signal by summing the second estimated phase error ($\varphi_{FF}$) and the feedback phase error ($\varphi_{PLL}$), to obtain the second phase shifted receive signal.

13. Method of the preceding claim,
wherein obtaining the second estimated phase error ($\varphi_{FF}$) includes filtering of the distinction value.

**Patentansprüche**

1. Phasenfehlerkompensationsanordnung (300, 400) zur Kompensation eines Phasenfehlers eines Empfangssignals, wobei die Phasenfehlerkompensationsanordnung (300, 400) einen ersten Phasenfehlerkompensator (305) und einen zweiten Phasenfehlerkompensator (200), der stromabwärts des ersten Phasenfehlerkompensators (305) angeordnet ist, umfasst, wobei der erste Phasenfehlerkompensator (305) dafür ausgelegt ist, einen ersten geschätzten Phasenfehler ($\varphi_{PS}$) des Empfangssignals basierend auf einem Wert des Empfangssignals und einem vordefinierten Pilotwert zu gewinnen, eine Phase des Empfangssignals um den ersten geschätzten Phasenfehler ($\varphi_{PS}$) zu verschieben und das phasenverschobene Empfangssignal an den zweiten Phasenfehlerkompensator (200) bereitzustellen, wobei der erste Phasenfehlerkompensator (305) einen Interpolator (350) umfasst, der dafür ausgelegt ist, eine zeitveränderliche Schätzung des ersten geschätzten Phasenfehlers ($\varphi_{PS}$) des Empfangssignals für die Zeiten bereitzustellen, zu denen kein Pilotwert im Empfangssignal vorliegt, wobei der zweite Phasenfehlerkompensator (200) umfasst:

   - ein Verzögerungselement (210) zum Verzögern des phasenverschobenen Empfangssignals;
   - einen Phasenfehlerschätzer (100) zum Bereitstellen eines zweiten geschätzten Phasenfehlers ($\varphi_{FF}$) des phasenverschobenen Empfangssignals;
   - einen Phasenschieber (220) zum Verschieben einer Phase des verzögerten, phasenverschobenen Empfangssignals um den zweiten geschätzten Phasenfehler ($\varphi_{FF}$); und wobei der Phasenfehlerschätzer (100) umfasst:
   - einen "Slicer" (110) zum Abbilden eines Wertes des phasenverschobenen Empfangssignals auf einen abgebildeten Wert;
   - einen Konjugator (120) zum Konjugieren des abgebildeten Wertes oder des Wertes des phasenverschobenen Empfangssignals, um eine konjugierte Ausgabe und eine unverarbeitete Ausgabe zu gewinnen;
   - einen Multiplizierer (130) zum Multiplizieren der konjugierten Ausgabe und der unverarbeiteten Ausgabe des Konjugators (120), um einen Unterscheidungswert zu gewinnen;
   - einen Phasenbestimmer (140) zum Bestimmen einer Phase des Unterscheidungswertes, um den zweiten geschätzten Phasenfehler ($\varphi_{FF}$) zu gewinnen; und wobei die Phasenfehlerkompensationsanordnung (400) **dadurch gekennzeichnet ist, dass** sie ferner umfasst:

   einen weiteren "Slicer" (410), der stromabwärts des zweiten Phasenfehlerkompensators (200) angeordnet ist, zum Abbilden eines Wertes eines Signals an einem Eingang des weiteren "Slicers" (410) auf einen abgebildeten Wert an einem Ausgang des weiteren "Slicers" (410), und einen "Feedback"-Phasenfehlerkompensator (420, 430), der dafür ausgelegt ist:

   - einen "Feedback"-Phasenfehler ($\varphi_{PLL}$) auf Basis eines Differenzwertes zwischen dem Wert am Eingang des weiteren "Slicers" (410) und dem abgebildeten Wert am Ausgang des weiteren "Slicers" (410) zu gewinnen; und
   - eine Phase des Empfangssignals um den "Feedback"-Phasenfehler ($\varphi_{PLL}$) zu verschieben, um das Signal am Eingang des weiteren "Slicers" (410) zu gewinnen.

2. Phasenfehlerkompensationsanordnung (300, 400) nach dem vorstehenden Anspruch, wobei der Phasenfehlerschätzer (100) ferner ein Filter (150) zum Filtern eines Ausgabewertes ($\varphi_F$) des Phasenbestimmers (140) aufweist, um den zweiten geschätzten Phasenfehler ($\varphi_{FF}$) zu gewinnen.

3. Phasenfehlerkompensationsanordnung (300, 400) nach dem vorstehenden Anspruch, wobei das Filter (150) ein Tiefpassfilter, insbesondere ein Gleitmittelwertfilter, umfasst.

4. Phasenfehlerkompensationsanordnung (300, 400) nach einem der Ansprüche 2 und 3, wobei das Filter (150) gleiche Gewichte für die Ausgabewerte des Phasenbestimmers (140) aufweist.

5. Phasenfehlerkompensationsanordnung (300, 400) nach einem der vorstehenden Ansprüche, wobei der Phasenschieber (220) einen komplexen Multiplizierer zum Multiplizieren eines Wertes des phasenverschobenen, verzögerten Empfangssignals mit einem Fehlerwert aufweist, wobei der Fehlerwert durch eine komplexe Exponentialfunktion des zweiten geschätzten Phasenfehlers ($\varphi_{FF}$) bestimmt wird.

6. Phasenfehlerkompensationsanordnung (300, 400) nach einem der vorstehenden Ansprüche, die ferner dafür ausgelegt ist, eine Verzögerungszeit des Verzögerungselements (210) an eine Verarbeitungszeit des Phasenfehlerschätzers (100) anzupassen.

7. Phasenfehlerkompensationsanordnung (300, 400) nach einem der vorstehenden Ansprüche, wobei der erste Phasenfehlerkompensator (305) dafür ausgelegt ist, Phasenfehlerwerte auf Basis des Wertes des Empfangssignals und des vordefinierten Pilotwertes zu gegebenen Zeiten zu bestimmen und den ersten geschätzten Phasenfehler ($\varphi_{PS}$) durch Interpolation zwischen den Phasenfehlerwerten zu gewinnen.

8. Phasenfehlerkompensationsanordnung (400) nach dem vorstehenden Anspruch, wobei der "Feedback"-Phasenfehlerkompensator (420, 430) einen Phasendetektor (510) und ein Schleifenfilter (520) aufweist, das mit dem Differenzwert ausgestattet ist, um den "Feedback"-Phasenfehler zu gewinnen.

9. Phasenfehlerkompensationsanordnung (300, 400) nach einem der vorstehenden Ansprüche, umfassend einen weiteren Phasenfehlerkompensator (610, 620), der in Kaskade mit dem zweiten Phasenfehlerkompensator (200) angeordnet ist, wobei der weitere Phasenfehlerkompensator (610, 620) einen weiteren Phasenfehlerschätzer (630, 640) umfasst, wie er in einem der vorstehenden Ansprüche definiert ist.

10. Phasenfehlerkompensationsanordnung (300, 400) nach dem vorstehenden Anspruch, wobei der weitere Phasenfehlerkompensator (610, 620) umfasst:

- ein Verzögerungselement zum Verzögern eines Eingangssignals des weiteren Phasenfehlerkompensators (610, 620);
- den weiteren Phasenfehlerschätzer (630, 640) zum Bereitstellen eines weiteren geschätzten Phasenfehlers ($\varphi_{FF2}$, $\varphi_{FFn}$) des Eingangssignals; und
- einen Phasenschieber (220) zum Verschieben einer Phase des verzögerten Eingangssignals um den weiteren geschätzten Phasenfehler ($\varphi_{FF2}$, $\varphi_{FFn}$).

11. Phasenfehlerkompensationsanordnung (300, 400) nach Anspruch 10, wobei der weitere Phasenfehlerschätzer (630, 640) umfasst:

- einen weiteren "Slicer" zum Abbilden eines Wertes des Eingangssignals auf einen abgebildeten Wert;
- einen weiteren Konjugator zum Konjugieren des abgebildeten Wertes oder des Wertes des Eingangssignals, um eine weitere konjugierte Ausgabe und eine weitere unverarbeitete Ausgabe zu gewinnen;
- einen weiteren Multiplizierer zum Multiplizieren der weiteren konjugierten Ausgabe und der weiteren unverarbeiteten Ausgabe des weiteren Konjugators, um einen weiteren Unterscheidungswert zu gewinnen; und
- einen weiteren Phasenbestimmer (140) zum Bestimmen einer Phase des weiteren Unterscheidungswertes, um den weiteren geschätzten Phasenfehler ($\varphi_{FF2}$, $\varphi_{FFn}$) zu gewinnen.

12. Phasenfehlerkompensationsverfahren zur Kompensation eines Phasenfehlers eines Empfangssignals, wobei das Phasenfehlerkompensationsverfahren umfasst:

- Gewinnen eines ersten geschätzten Phasenfehlers ($\varphi_{PS}$) des Empfangssignals basierend auf einem Wert des Empfangssignals und einem vordefinierten Pilotwert;
- Verschieben einer Phase des Empfangssignals um den ersten geschätzten Phasenfehler ($\varphi_{PS}$), um ein erstes phasenverschobenes Empfangssignal zu gewinnen;
- Abbilden eines Wertes des ersten phasenverschobenen Empfangssignals auf einen ersten abgebildeten Wert;
- Konjugieren des ersten abgebildeten Wertes oder des Wertes des ersten phasenverschobenen Empfangssignals, um einen konjugierten Ausgabewert und einen unverarbeiteten Ausgabewert zu gewinnen;
- Multiplizieren des konjugierten Ausgabewertes und des unverarbeiteten Ausgabewertes, um einen Unterscheidungswert zu gewinnen;
- Bestimmen einer Phase des Unterscheidungswertes, um einen zweiten geschätzten Phasenfehler ($\varphi_{FF}$) zu gewinnen;
- Verzögern des ersten phasenverschobenen Empfangssignals;
- Verschieben einer Phase des verzögerten, ersten phasenverschobenen Empfangssignals um den zweiten geschätzten Phasenfehler ($\varphi_{FF}$), um ein zweites phasenverschobenes Empfangssignal zu gewinnen;
- wobei Gewinnen eines ersten geschätzten Phasenfehlers ($\varphi_{PS}$) des Empfangssignals umfasst, eine zeitveränderliche Schätzung des ersten geschätzten Phasenfehlers ($\varphi_{PS}$) des Empfangssignals für die Zeiten bereitzustellen, zu denen kein Pilotwert im Empfangssignal vorliegt, **dadurch gekennzeichnet, dass** das Phasenfehlerkompensationsverfahren ferner folgende Schritte umfasst:
- Abbilden eines Wertes des zweiten phasenverschobenen Empfangssignals auf einen zweiten abgebildeten Wert;
- Berechnen eines Differenzwertes zwischen dem zweiten um den zweiten geschätzten Phasenfehler ($\varphi_{FF}$) phasenverschobenen Empfangssignal und dem abgebildeten Wert des zweiten phasenverschobenen Empfangssignals; und
- Gewinnen eines "Feedback"-Phasenfehlers ($\varphi_{PLL}$) auf Basis des gewonnenen Differenzwertes;
- Verschieben einer Phase des Empfangssignals durch Summieren des zweiten geschätzten Phasenfehlers ($\varphi_{FF}$) und des "Feedback"-Phasenfehlers ($\varphi_{PLL}$), um das zweite phasenverschobene Empfangssignal zu gewinnen.

13. Verfahren nach dem vorstehenden Anspruch, wobei Gewinnen des zweiten geschätzten Phasenfehlers ($\varphi_{FF}$) umfasst, den Unterscheidungswert zu filtern.

## Revendications

1. Dispositif de compensation d'erreur de phase (300, 400) destiné à compenser une erreur de phase d'un signal de réception, le dispositif de compensation d'erreur de phase (300, 400) comprenant un premier compensateur d'erreur de phase (305) et un second compensateur d'erreur de phase (200) disposé en aval du premier compensateur d'erreur de phase (305), dans lequel le premier compensateur d'erreur de phase (305) est configuré pour obtenir une première erreur de phase estimée ($\varphi_{PS}$) du signal de réception sur la base d'une valeur du signal de réception et d'une valeur pilote prédéfinie, pour déphaser le signal reçu de la première erreur de phase estimée ($\varphi_{PS}$), et pour fournir le signal de réception déphasé au second compensateur d'erreur de phase (200), le premier compensateur d'erreur de phase (305) comportant un interpolateur (350) configuré pour fournir une estimation variant dans le temps de la première erreur de phase estimée ($\varphi_{PS}$) du signal de réception pour les instants où aucune valeur pilote n'est présente dans le signal de réception, dans lequel le second compensateur d'erreur de phase (200) comprend :

   - un élément à retard (210) destiné à retarder le signal de réception déphasé ;
   - un estimateur d'erreur de phase (100) destiné à fournir une seconde erreur de phase estimée ($\varphi_{FF}$) du signal de réception déphasé ;
   - un déphaseur (220) destiné à déphaser le signal de réception déphasé retardé de la seconde erreur de phase estimée ($\varphi_{FF}$) ; et dans lequel l'estimateur d'erreur de phase (100) comprend :
   - un découpeur (110) destiné à projeter une valeur du signal de réception déphasé sur une valeur projetée ;
   - un conjugueur (120) destiné à conjuguer l'une de la valeur projetée et de la valeur du signal de réception déphasé afin d'obtenir une sortie conjuguée et une sortie non traitée ;
   - un multiplieur (130) destiné à multiplier la sortie conjuguée par la sortie non traitée du conjugueur (120) afin d'obtenir une valeur de distinction ;

   - un dispositif de détermination de phase (140) destiné à déterminer une phase de la valeur de distinction afin d'obtenir la seconde erreur de phase estimée ($\varphi_{FF}$) ; le dispositif de compensation d'erreur de phase (400) étant **caractérisé en ce qu'**il comprend en outre :

      un autre découpeur (410) disposé en aval du second compensateur d'erreur de phase (200), destiné à projeter une valeur d'un signal à une entrée du découpeur supplémentaire (410) sur une valeur projetée à une sortie de l'autre découpeur (410), et un compensateur d'erreur de phase de rétroaction (420, 430) qui est configuré :

      - pour obtenir une erreur de phase de rétroaction ($\varphi_{PLL}$) sur la base d'une valeur de différence entre la valeur à l'entrée de l'autre découpeur (410) et la valeur projetée à la sortie de l'autre découpeur (410) ; et
      - pour déphaser le signal de réception de l'erreur de phase de rétroaction ($\varphi_{PLL}$) afin d'obtenir le signal à l'entrée de l'autre découpeur (410).

2. Dispositif de compensation d'erreur de phase (300, 400) selon la revendication précédente, dans lequel l'estimateur d'erreur de phase (100) comporte en outre un filtre (150) destiné à filtrer une valeur de sortie ($\varphi_F$) du dispositif de détermination de phase (140) afin d'obtenir la seconde erreur de phase estimée ($\varphi_{FF}$).

3. Dispositif de compensation d'erreur de phase (300, 400) selon la revendication précédente, dans lequel le filtre (150) comporte un filtre passe-bas, notamment un filtre à moyenne glissante.

4. Dispositif de compensation d'erreur de phase (300, 400) selon l'une des revendications 2 et 3, dans lequel le filtre (150) comporte des poids égaux pour les valeurs de sortie du dispositif de détermination de phase (140).

5. Dispositif de compensation d'erreur de phase (300, 400) selon l'une des revendications précédentes, dans lequel le déphaseur (220) comporte un multiplieur complexe destiné à multiplier une valeur du signal de réception retardé déphasé par une valeur d'erreur, la valeur d'erreur étant déterminée par une fonction exponentielle complexe de la seconde erreur de phase estimée ($\varphi_{FF}$).

6. Dispositif de compensation d'erreur de phase (300, 400) selon l'une des revendications précédentes, qui est en outre configuré pour adapter un temps de retard de l'élément à retard (210) à un temps de traitement de l'estimateur d'erreur de phase (100).

**7.** Dispositif de compensation d'erreur de phase (300, 400) selon l'une des revendications précédentes, dans lequel le premier compensateur d'erreur de phase (305) est configuré pour déterminer des valeurs d'erreur de phase sur la base de la valeur du signal de réception et de la valeur pilote prédéfinie à des instants donnés et pour obtenir la première erreur de phase estimée ($\varphi_{PS}$) par interpolation entre les valeurs d'erreur de phase.

**8.** Dispositif de compensation d'erreur de phase (400) selon la revendication précédente, dans lequel le compensateur d'erreur de phase de rétroaction (420, 430) comporte un détecteur de phase (510) et un filtre en boucle (520) auquel est fournie la valeur de différence afin d'obtenir l'erreur de phase de rétroaction.

**9.** Dispositif de compensation d'erreur de phase (300, 400) selon l'une des revendications précédentes, comprenant un autre compensateur d'erreur de phase (610, 620) qui est disposé en cascade par rapport au second compensateur d'erreur de phase (200), l'autre compensateur d'erreur de phase (610, 620) comportant un autre estimateur d'erreur de phase (630, 640) selon l'une des revendications précédentes.

**10.** Dispositif de compensation d'erreur de phase (300, 400) selon la revendication précédente, dans lequel l'autre compensateur d'erreur de phase (610, 620) comporte :

- un élément à retard destiné à retarder un signal d'entrée de l'autre compensateur d'erreur de phase (610, 620) ;
- l'autre estimateur d'erreur de phase (630, 640) destiné à fournir une autre erreur de phase estimée ($\varphi_{FF2}$, $\varphi_{FFn}$) dudit signal d'entrée ; et
- un déphaseur (220) destiné à déphaser le signal d'entrée retardé de l'autre erreur de phase estimée ($\varphi_{FF2}$, $\varphi_{FFn}$).

**11.** Dispositif de compensation d'erreur de phase (300, 400) selon la revendication 10, dans lequel l'autre estimateur d'erreur de phase (630, 640) comprend :

- un autre découpeur destiné à projeter une valeur dudit signal d'entrée sur une valeur projetée ;
- un autre conjugueur destiné à conjuguer l'une de la valeur projetée et de la valeur dudit signal d'entrée afin d'obtenir une autre sortie conjuguée et une autre sortie non traitée ;
- un autre multiplieur destiné à multiplier l'autre sortie conjuguée par l'autre sortie non traitée de l'autre conjugueur afin d'obtenir une autre valeur de distinction ; et

- un autre dispositif de détermination de phase (140) destiné à déterminer une phase de l'autre valeur de distinction afin d'obtenir l'autre erreur de phase estimée ($\varphi_{FF2}$, $\varphi_{FFn}$).

**12.** Procédé de compensation d'erreur de phase destiné à compenser une erreur de phase d'un signal de réception, le procédé de compensation d'erreur de phase comprenant :

- obtenir une première erreur de phase estimée ($\varphi_{PS}$) du signal de réception sur la base d'une valeur du signal de réception et d'une valeur pilote prédéfinie ;
- déphaser le signal de réception de la première erreur de phase estimée ($\varphi_{PS}$), pour obtenir un premier signal de réception déphasé ;
- projeter une valeur du premier signal de réception déphasé sur une première valeur projetée ;
- conjuguer l'une de la première valeur projetée et de la valeur du premier signal de réception déphasé afin d'obtenir une valeur de sortie conjuguée et une valeur de sortie non traitée ;
- multiplier la valeur de sortie conjuguée par la valeur de sortie non traitée afin d'obtenir une valeur de distinction ;
- déterminer une phase de la valeur de distinction afin d'obtenir une seconde erreur de phase estimée ($\varphi_{FF}$) ;
- retarder le premier signal de réception déphasé ;
- déphaser le premier signal de réception déphasé retardé de la seconde erreur de phase estimée ($\varphi_{FF}$), pour obtenir un second signal de réception déphasé ;
- calculer une valeur de différence entre le second signal de réception déphasé retardé de la seconde erreur de phase estimée ($\varphi_{FF}$) et la valeur projetée du second signal de réception déphasé ; et
- obtenir une erreur de phase de rétroaction ($\varphi_{PLL}$) sur la base de la valeur de différence obtenue ;
- déphaser le signal de réception en sommant la seconde erreur de phase estimée ($\varphi_{FF}$) et l'erreur de phase de rétroaction ($\varphi_{PLL}$), pour obtenir le second signal de réception déphasé.

**13.** Procédé selon la revendication précédente, dans lequel l'obtention de la seconde erreur de phase estimée ($\varphi_{FF}$) comprend le filtrage de la valeur de distinction.

**Fig. 1**

**Fig. 2**

**Fig. 3**

**Fig. 4**

430

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002126748 A1